(19) Europäisches Patentamt

European Patent Office

Office européen des brevets

(11) EP 1 484 288 A2

(12) **DEMANDE DE BREVET EUROPEEN**

(43) Date de publication:
08.12.2004 Bulletin 2004/50

(51) Int Cl.7: **C02F 3/34**, C02F 3/10
// (C02F3/34, 101:34)

(21) Numéro de dépôt: 04291302.0

(22) Date de dépôt: 19.05.2004

(84) Etats contractants désignés:
AT BE BG CH CY CZ DE DK EE ES FI FR GB GR
HU IE IT LI LU MC NL PL PT RO SE SI SK TR
Etats d'extension désignés:
AL HR LT LV MK

(30) Priorité: 02.06.2003 FR 0306647

(71) Demandeurs:
 • **Institut Français du Pétrole**
 **92852 Rueil-Malmaison Cedex (FR)**
 • **Institut de Recherche en Biotechnologie**
 **H4P 2R2 Montreal, Quebec (CA)**

(72) Inventeurs:
 • **Lyew, Darwin**
 **J4W 2P2 Montreal, Quebec (CA)**
 • **Guiot, Serge**
 **H3C 4P3 Montreal, Quebec (CA)**
 • **Fayolle, Françoise**
 **92140 Clamart (FR)**
 • **Monot, Frédéric**
 **92000 Nanterre (FR)**

(74) Mandataire: **Benoist, François**
 **Institut Français du Pétrole**
 **1 et 4, avenue de Bois-Préau**
 **92852 Rueil-Malmaison (FR)**

(54) **Procédé de traitement d'un effluent pollué par du MTBE ou du TAME utilisant la souche Mycobacterium austroafricanum I-2562 fixée sur un support minéral comprenant de la perlite**

(57) Pour réduire la concentration du méthyl *tert*-butyl éther (MTBE) ou du *tert*-amyl méthyl éther (TAME) dans un aquifère pollué par ces éthers, on utilise dans un procédé de type biobarrière ou biofiltre un support minéral nouveau pour la fixation des bactéries, et en particulier de *Mycobacterium austroafricanum* I-2562, ledit support minéral comprenant de la perlite.

EP 1 484 288 A2

## Description

L'invention concerne le traitement par un procédé de type biobarrière ou biofiltre d'un effluent pollué par du MTBE ou du TAME, utilisant des bactéries capables de dégrader le méthyl *tert*-butyl éther ou le *tert*-amyl méthyl éther.

Elle concerne plus particulièrement l'utilisation dans un tel procédé d'un support de type nouveau servant à fixer les bactéries. Elle s'applique particulièrement à l'industrie du traitement de l'eau et des sols et nappes aquifères.

Il est connu que le méthyl tert-butyl éther (désigné ci-après sous le terme de MTBE) ou le tert-amyl méthyl éther (désigné ci-après sous le terme de TAME) sont des éthers qui peuvent être utilisés comme additifs oxygénés dans les essences sans plomb dans le but d'augmenter leur indice d'octane. L'utilisation croissante d'additifs comme le MTBE ou le TAME entraîne des volumes importants stockés et transportés, en mélange dans les essences, notamment. En raison de la fréquence relativement élevée de fuites constatées sur les stockages souterrains d'essence (stations-service en particulier), les composés solubles des essences se solubilisent alors dans les aquifères au contact. C'est en particulier le cas du MTBE qui est très soluble dans l'eau (40 g.L$^{-1}$) mais aussi du TAME. La présence, en particulier de MTBE, dans des puits de captage d'eau souterraine se traduit pour le consommateur par un goût désagréable sensible même à faible concentration. Par ailleurs, la mobilité de ces composés fait que les « panaches » de pollution sont très larges. Ces deux points, en liaison avec le problème de santé publique posé par les éventuels effets de l'ingestion par le consommateur d'eau polluée par du MTBE ou du TAME à faible concentration sur des périodes de longue durée, fait que la mise en oeuvre de procédé de dépollution est envisagée.

Les procédés physico-chimiques de dépollution s'avèrent, dans ce cas précis, et en raison des propriétés physico-chimiques de ces composés, assez peu efficaces et des procédés mettant en oeuvre des microorganismes aérobies avec des capacités particulières de dégradation du MTBE ou du TAME sont envisagés. De tels microorganismes sont rares et leurs croissances sur MTBE, en particulier, sont lentes. Il est donc particulièrement intéressant de définir un mode de mise en oeuvre de ces microorganismes qui optimise leurs capacités particulières. La littérature récente montre que c'est le cas de la biobarrière où l'utilisation du polluant comme source de carbone et d'énergie par la microflore mise en oeuvre constitue un avantage évident, et cette technologie est parfaitement adaptée à la mise en place efficace de la microflore sélectionnée dans l'aquifère à décontaminer. Dans ce cas, une tranchée est creusée à l'aplomb de l'aquifère pollué par le MTBE ou par du TAME, puis un support, en général de nature minérale, est mis en place et les microorganismes aérobies d'intérêt (dégradeurs de MTBE et/ou de TAME) sont fixés sur ledit support pour dépolluer la nappe au cours de son écoulement naturel ou forcé à travers la biobarrière. Plus précisément, on peut faire développer la bactérie sur un système de biofiltre ou de biobarrière de volume adéquat, on introduit les effluents contenant lesdits éthers en présence d'air ou d'oxygène dans le biofiltre ou dans la biobarrière à un débit d'alimentation en MTBE inférieur à 30 mg.L$^{-1}$.h$^{-1}$ et l'effluent contient une concentration réduite en lesdits éthers.

Par exemple, Steffan *et al.* [2001] ont utilisé avec succès la souche sélectionnée ENV425 par bioaugmentation dans les aquifères contaminés dans des conditions (injection d'air additionné de propane) permettant à la souche de dégrader *in situ* le MTBE par cométabolisme. De même, Salanitro [2000] a utilisé une culture améliorée du consortium BC-1 pour réaliser une opération pilote de réhabilitation d'une nappe polluée par du MTBE. Le traitement mettait en oeuvre une biobarrière de 6 m de long alimentée en oxygène. Le support était constitué par le sable de la formation qui était d'une granulométrie moyenne. Après 261 jours, la concentration de MTBE avait diminué de 2-9 mg L$^{-1}$ à une valeur inférieure à 10 µg L$^{-1}$ dans la zone ayant bénéficié de la bioaugmentation. La concentration en TBA était, elle aussi, inférieure à 10 µg L$^{-1}$. Une diminution effective mais nettement plus lente de la concentration en MTBE était observée dans la zone de contrôle seulement stimulée par apport d'oxygène.

La Demanderesse a décrit dans la demande de brevet français FR-A-2 830 854 l'isolement d'une bactérie, *Mycobacterium* sp. I-2562, par la suite identifiée comme *Mycobacterium austroafricanum* I-2562, ou *M. austroafricanum* I-2562, capable de pousser sur MTBE ou sur TAME comme unique source de carbone et d'énergie aboutissant à une dégradation complète du MTBE et des intermédiaires de sa dégradation, le *tert*-butyl formiate ou TBF et le *tert*-butyl alcool ou TBA, jusqu'en dioxyde de carbone et eau ainsi qu'à la production de biomasse ou bien à une dégradation complète du TAME et des intermédiaires de sa dégradation, le *tert*-amyl formiate ou TAF et le *tert*-amyl alcool ou TAA, jusqu'en dioxyde de carbone et eau ainsi qu'à la production de biomasse. L'addition d'extrait de levure au cours de la croissance sur MTBE, en particulier, avait un effet positif sur la croissance en améliorant la vitesse de dégradation du MTBE bien que l'extrait de levure seul ne constituât pas un substrat de croissance pour la souche.

Un des objectifs de l'invention est de décrire les nouvelles potentialités d'un support minéral, non encore utilisé dans ce but, pour la fixation d'une bactérie d'intérêt afin d'utiliser le complexe support- bactéries dans une mise en oeuvre de type biobarrière pour dépolluer des aquifères contenant du MTBE et/ou du TAME, ou biofiltre pour dépolluer des gaz contenant ces mêmes produits.

Le procédé de l'invention utilise un aluminosilicate expansé, couramment nommé perlite, afin de fixer la bactérie *M. austroafricanum* I-2562 de façon plus avantageuse que d'autres matériaux souvent utilisés, qui peuvent être la pierre ponce, la tourbe, la pouzzolane ou le charbon activé, dans le but d'utiliser le complexe résultant perlite - *M. austroafricanum* I-2562 dans une biobarrière afin de réduire la concentration de MTBE et/ou de TAME dans un aquifère pollué par l'un ou l'autre ou ces deux composés.

Le procédé utilise une souche bactérienne, isolée de l'environnement, qui est capable de dégrader le MTBE et/ou le TAME de façon complète sans accumulation d'intermédiaire de dégradation. Cette bactérie déposée à l'Institut Pasteur (CNCM de l'Institut Pasteur, 25, rue du Docteur Roux, F-75724 PARIS CEDEX 15) est *M. austroafricanum* I-2562.

Plus précisément, le procédé consiste en un traitement d'effluents aqueux contenant au moins un éther : méthyl *tert* butyl éther (MTBE) ou *tert* amyl méthyl éther (TAME) afin de réduire la concentration desdits éthers, dans lequel on fait croître en conditions aérobies une bactérie *M. austroafricanum* I-2562 en présence d'un desdits éthers et on fait dégrader ledit éther par ladite bactérie jusqu'aux produits ultimes de la dégradation, le dioxyde de carbone et l'eau, la bactérie *M. austroafricanum* I-2562 étant fixée sur un support comprenant au moins 50 % en masse de perlite. De manière préférée, le support minéral consiste essentiellement en perlite.

Selon une caractéristique de l'invention, les effluents aqueux peuvent être un aquifère contenant du MTBE et/ou du TAME et dans lequel on introduit sous la forme adéquate la bactérie *M. austroafricanum* I-2562 afin de réduire la concentration en MTBE et/ou en TAME dans l'aquifère.

Selon une autre caractéristique, on peut ajouter au substrat de croissance de l'extrait de levure dans des proportions comprises entre 10 et 200 mg.L$^{-1}$.

Dans ces expérimentations, il faut noter que le MTBE ou le TAME peuvent être fournis comme seule source de carbone mais des additifs nutritionnels peuvent être rajoutés au milieu de croissance pour accélérer la croissance sur MTBE ou sur TAME de la bactérie. Ainsi, un substrat carboné secondaire, tel que le glucose, peut être ajouté de façon continue, intermittente ou cyclique (« pulses») à une dose faible de manière à ne pas être en excès de substrat par rapport à l'oxygène dissous disponible, sachant que le glucose a une Demande Théorique en Oxygène (D. Th. O.) de 1,06 mg d'oxygène.g$^{-1}$ de glucose. Cet ajout permet de stimuler la bactérie *M. austroafricanum* I-2562 et/ou d'augmenter sa viabilité pour des mises en oeuvre de longue durée.

L'apport de l'oxygène dans les procédés de type biobarrière peut être réalisé de différentes manières : il peut être fourni par addition d'air dans l'aquifère via un piézomètre relié à un compresseur et implanté directement dans l'aquifère à dépolluer. L'oxygène peut également être fourni par des éléments chimiques injectés comme l'eau oxygénée qui libère une mole d'oxygène pour deux moles d'eau oxygénée :

$$H_2O_2 \rightarrow H_2O + \tfrac{1}{2} O_2$$

Il est également possible d'utiliser d'autres composés qui se décomposent au contact de l'eau libérant ainsi de l'oxygène (« Oxygen Release Compound » ou ORC). On peut utiliser à cette fin le peroxyde de magnésium, qui s'hydrolyse en libérant de l'oxygène et en produisant de la magnésie :

$$MgO_2 + H_2O \rightarrow Mg(OH)_2 + \tfrac{1}{2} O_2$$

L'ensemencement du support peut être effectué de deux façons : on met en place le support, c'est-à-dire la perlite, dans le biofiltre ou dans la biobarrière et on cultive la bactérie *M. austroafricanum* I-2562 dans un réacteur sur le milieu minéral contenant par exemple de l'alcool tert-butylique ou TBA comme substrat de croissance, ce qui permet d'obtenir une biomasse importante tout en induisant les systèmes enzymatiques responsables de la dégradation du MTBE ou du TAME ; puis, après croissance, on introduit la culture obtenue sur la perlite. On peut aussi introduire la perlite et la bactérie de façon simultanée puis laisser la bactérie *M. austroafricanum* I-2562 se développer en présence d'un substrat de croissance qui peut être le MTBE ou le TAME contenu dans l'aquifère ou une autre source de carbone ajoutée, de manière à fixer la bactérie sur le support simultanément à sa croissance.

Dans les procédés ainsi mis en ceuvre, *M. austroafricanum* I-2562 est capable de dégrader des concentrations variables en MTBE et/ou en TAME. On a obtenu, par exemple, d'excellents résultats avec des concentrations en MTBE dans l'effluent comprises entre 0,05 et 200 mg.L$^{-1}$.

L'invention sera mieux comprise par les exemples suivants.

## EXEMPLE 1

Un test de respiration des microorganismes a été utilisé dans des conditions standard pour comparer la capacité de fixation de *M. austroafricanum* I-2562 sur différents supports couramment utilisés à cet effet : la tourbe, le charbon activé, la pierre ponce, la pouzzolane et la perlite.

On effectue une préculture de la bactérie *M. austroafricanum* I-2562: on ensemence la souche *M. austroafricanum* I-2562 sur milieu minéral salin MM supplémenté en *tert*-butanol ou TBA à 1 g.L$^{-1}$ comme source de carbone et d'énergie. Le milieu MM a la composition suivante :

- KH$_2$PO$_4$         1,4 g
- K$_2$HPO$_4$         1,7 g
- NaNO$_3$         1,5 g
- MgSO$_4$, 7H$_2$O         0,5g
- CaCl$_2$, 2H$_2$O         0,04 g
- FeCl$_3$, 6H$_2$O         0,012 g
- Solution concentrée d'oligo-éléments         1 mL
- H$_2$O         q.s.p.1 litre

La solution concentrée d'oligo-éléments a la composition suivante pour 1 litre d'eau distillée :

- CuSO$_4$, 5 H$_2$O         0,1 g
- MnSO$_4$, 2H$_2$O         1 g
- ZnSO$_4$, 7 H$_2$O         1 g
- AlCl$_3$, 6H$_2$O         0,4 g
- NiCl$_2$,6 H$_2$O         0,25 g
- H$_3$BO$_3$         0,1 g
- CoCl$_2$, 6 H$_2$O         1 g
- Na$_2$MoO$_4$, 2H$_2$O         1 g
- Na$_2$WO$_4$, 2H$_2$O$_2$         1 g

Le test proprement dit est effectué dans des fioles pénicilline (160 mL) . Un volume fixe (50 mL) de chacun des supports est introduit dans une fiole ainsi qu'un volume fixe (50 mL) de milieu minéral MM.

Dans le cas de la tourbe, en raison de l'activité biologique naturelle de ce support, une procédure de traitement préalable est appliquée. Elle consiste en trois stérilisations successives (120°C pendant 20 minutes).

Les fioles sont ensuite pesées puis stérilisées par autoclavage (120°C pendant 30 minutes), trois fois de suite, avec un intervalle de temps de 24 h entre chaque stérilisation. La perte de poids éventuelle est évaluée par pesée et le poids de chaque fiole est ajusté au poids initial par addition d'un volume adéquat de milieu MM stérile.

La préculture définie ci-dessus est utilisée pour ensemencer chacune de ces fioles de façon identique de manière à obtenir une densité optique à 600 nm (D.O.600 nm) initiale de 0,1, correspondant à un ratio d'ensemencement de 10 % environ. Le substrat carboné utilisé pour un test rapide de la fixation de la bactérie *M. austroafricanum* I-2562 est le *tert*-butyl alcool (TBA), un intermédiaire précoce de la dégradation du MTBE par cette bactérie. En effet, *M. austroafricanum* I-2562 pousse rapidement sur ce substrat carboné. Le TBA est ajouté dans chaque fiole à raison de 1 g.L$^{-1}$. La bactérie *M. austroafricanum* I-2562 est laissée en contact avec le support 72 heures, sous agitation (100 rpm) à la température de la pièce.

Pour chacun des supports, un témoin réalisé dans les mêmes conditions et qui contient également le substrat carboné, le TBA, mais qui n'est pas ensemencé avec la bactérie *M. austroafricanum* I-2562, est également réalisé.

Après 72 heures, le milieu est égoutté puis la totalité du support contenu dans la fiole est lavé (30 mL de milieu MM stérile), soumis à une agitation par Vortex puis égoutté et ceci deux fois de suite ; cette procédure de lavage permet d'éliminer les bactéries en suspension qui ne se sont pas fixées sur le support. Les témoins de l'expérience sont également soumis au même traitement de lavage. Enfin, 50 mL de milieu MM sont introduits ainsi que du TBA à la concentration de 1 g.L$^{-1}$. Les fioles sont bouchées par des bouchons en butyle et serties par des capsules en aluminium et la quantité d'oxygène résiduelle ainsi que la quantité de CO$_2$ produite sont mesurées par chromatographie en phase gazeuse sur des prélèvements effectués dans la phase gazeuse de chacune des fioles. Ces quantités reflètent l'activité métabolique des bactéries présentes dans la fiole, c'est-à-dire qui sont restées fixées au support solide. Ces quantités sont donc d'autant plus élevées que la quantité de cellules immobilisées est grande. Les résultats présentés dans le Tableau 1 sont exprimés en mg d'oxygène consommé par gramme de support et par heure (mg O$_2$.g$^{-1}$ support.h$^{-1}$) et en mg de CO$_2$ produit par gramme de support et par heure (mg CO$_2$.g$^{-1}$ support.h$^{-1}$). Les résultats présentés dans le Tableau 2 sont exprimés en mg d'oxygène consommé par millilitre de support et par heure (mg O$_2$. mL$^{-1}$ support.h$^{-1}$) et en mg de CO$_2$ produit par millilitre de support et par heure (mg CO$_2$.mL$^{-1}$ support.h$^{-1}$).

Les résultats obtenus dans ce test comparatif montrent bien l'avantage de l'utilisation de la perlite pour la fixation de *M. austroafricanum* I-2562 puisque :

1) c'est avec ce support que la consommation de dioxygène et la production de dioxyde de carbone liées à la consommation du TBA sont les plus fortes, ce qui montre que la fixation des microorganismes est importante, et
2) que cette fixation est effective dès un temps de contact de 72 h entre le support et le microorganisme montrant la capacité rapide de colonisation de ce support par la bactérie.

Tableau 1 :

| Consommation de dioxygène et production de dioxyde de carbone par *M. austroafricanum* I-2562 en fonction du support et de la durée de la mise en contact | | | | | |
|---|---|---|---|---|---|
| Support testé | Granulométrie | Mesures effectuées après 72 h | | | |
| | | Consommation de $O_2$ (mg.kg$^{-1}$ support.h$^{-1}$) | | Production de $CO_2$ (mg.kg$^{-1}$ support.h$^{-1}$) | |
| | | Témoin[*] | Essai[**] | Témoin[*] | Essai[**] |
| Tourbe | ND | ND | ND | ND | ND |
| Charbon activé | ND | $4,0 \pm 1,4$ | $9,0 \pm 1,4$ | 0 | $2,0 \pm 0$ |
| Pierre ponce | 5-10 mm | $0,6 \pm 0,4$ | $15,5 \pm 3,1$ | 0 | $6,0 \pm 2,0$ |
| Pouzzolane | 4-6 mm | 0 | $4,5 \pm 0,7$ | 0 | $2,0 \pm 0$ |
| Perlite | 2-5 mm | $3,5 \pm 3,9$ | $92,9 \pm 23,9$ | 0 | $31,3 \pm 4,1$ |

Tableau 2 :

| Consommation de dioxygène et production de dioxyde de carbone par *M. austroafricanum* I-2562 en fonction du support et de la durée de la mise en contact | | | | |
|---|---|---|---|---|
| Support testé | Mesures effectuées après 72 h | | | |
| | Consommation de $O_2$ (mg.L$^{-1}$ support.h$^{-1}$) | | Production de $CO_2$ (mg.L$^{-1}$ support.h$^{-1}$) | |
| | Témoin[*] | Essai[**] | Témoin[*] | Essai[**] |
| Tourbe | ND | ND | ND | ND |
| Charbon activé | $1,5 \pm 0,7$ | $3,2 \pm 0,4$ | 0 | $0,6 \pm 0$ |
| Pierre ponce | $0,2 \pm 0,2$ | $6,7 \pm 1$ | 0 | $2,4 \pm 0,7$ |
| Pouzzolane | $0,1 \pm 0,1$ | $4,0 \pm 0,9$ | 0 | $1,8 \pm 0,2$ |
| Perlite | $0,5 \pm 0,5$ | $11,3 \pm 1,5$ | 0 | $3,9 \pm 0,5$ |

**EXEMPLE 2**

Dans cet exemple, la perlite est utilisée comme support de la bactérie *M. austroafricanum* I-2562 dans un réacteur de type biofiltre pour le traitement d'effluent contenant du MTBE.
L'ensemencement de la perlite s'effectue en deux étapes : une étape de production de la biomasse et une étape de fixation de la biomasse sur la perlite.

- Production de la biomasse : on effectue une culture de la bactérie *M. austroafricanum* I-2562 sur 5 L de milieu minéral de composition identique à ce qui est décrit dans l'Exemple 1 mis à part la source d'azote qui est dans ce cas $(NH_4)_2SO_4$ à 1,2 g.l$^{-1}$ et une supplémentation en extrait de levure (0,05g.L$^{-1}$). La source de carbone est le TBA à 1 g.L$^{-1}$. Après une incubation de 4 jours, la biomasse produite (environ 2,7 g) est récoltée par centrifugation et remise en suspension dans 330 mL du même milieu minéral.
- Fixation sur la perlite : cette étape est effectuée en batch. On introduit la biomasse récoltée ci-dessus dans un récipient contenant 4 L de perlite en présence de 2,8 L de milieu minéral décrit ci-dessus. La source de carbone est le TBA à une concentration de 0,6 g.L$^{-1}$ et l'oxygène est amené par bullage d'air dans le milieu de culture. L'agitation est réalisée grâce à un barreau aimanté. Cette étape est effectuée pendant 24 heures. La perlite ensemencée est alors égouttée.

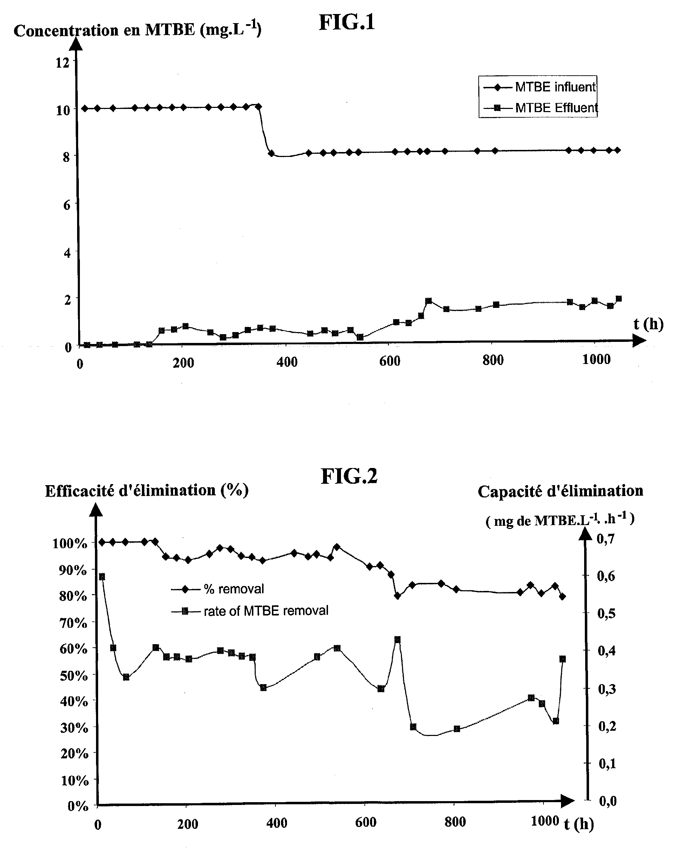

La perlite ensemencée avec la bactérie *M. austroafricanum* I-2562 est introduite dans un biofiltre d'un volume de 4,7 L. Le milieu minéral est introduit puis le biofiltre est fermé. Le réacteur contenant le lit fixe (perlite) sur lequel est fixé *M. austroafricanum* I-2562 est mis en fonctionnement continu. Le milieu d'alimentation est constitué du milieu de culture préalablement stérilisé ayant la composition mentionnée dans l'Exemple 1 auquel on ajoute une solution de MTBE. L'alimentation se fait par le bas du réacteur et, après passage à travers le lit réactionnel (immergé), l'effluent est récupéré en haut du réacteur et est analysé. L'alimentation en MTBE initiale assure une concentration en entrée de 10 mg.L$^{-1}$ et un temps de séjour initial dans le biofiltre qui est de 50 heures, ce temps de séjour étant par la suite augmenté jusqu'à une durée de 4 jours. L'oxygène est amené par le milieu minéral que l'on sature en oxygène, ainsi que par un bullage en air dans le biofiltre (à raison de 0,4 L.h$^{-1}$). Les concentrations de MTBE en entrée et en sortie de biofiltre sont mesurées (Figure 1) et on peut calculer l'efficacité de dégradation (% de MTBE dégradé sur le biofiltre) ainsi que la capacité d'élimination du biofiltre (mg de MTBE dégradé. h$^1$.L$^{-1}$ de biofiltre). Les courbes correspondantes sont présentées sur la Figure 2. Sur la Figure 2, on constate que le taux d'élimination de MTBE par *M. austroafricanum* I-2562 fixée sur la perlite est de 100 % pendant les 150 premières heures de fonctionnement en continu du réacteur. La concentration en MTBE (Figure 1) passe ainsi de 10 mg.L$^{-1}$ à une concentration inférieure au seuil de détection (100 μg.L$^{-1}$). La concentration dans l'effluent croît ensuite mais reste inférieure à 1 mg.L$^{-1}$ pendant plus de 500 heures, ce qui montre la forte activité des cellules de *M. austroafricanum* I-2562 fixées sur ce support pour l'élimination du MTBE.

**Revendications**

1. Procédé de traitement d'un effluent aqueux contenant au moins un éther choisi parmi le méthyl *tert*-butyl éther (MTBE) et le méthyl *tert*-amyl éther (TAME) destiné à réduire la concentration dudit éther dans ledit effluent, dans lequel on fait croître en conditions aérobies la bactérie *Mycobacterium austroafricanum* I-2562 en présence d'un substrat de croissance comprenant ledit éther comme source de carbone et d'énergie et on fait dégrader ledit éther par ladite bactérie jusqu'aux produits ultimes de dégradation, le dioxyde de carbone et l'eau, ledit procédé étant **caractérisé en ce que** ladite bactérie est fixée sur un support comprenant au moins 50 % en masse de perlite.

2. Procédé selon la revendication 1 **caractérisé en ce que** ledit support consiste essentiellement en perlite.

3. Procédé selon l'une des revendications 1 et 2 **caractérisé en ce que** l'on ajoute au substrat de croissance de l'extrait de levure dans des proportions comprises entre 10 et 200 mg.L$^{-1}$.

4. Procédé selon l'une des revendications 1 à 3 **caractérisé en ce que** l'on ajoute au milieu de croissance au moins un additif nutritionnel.

5. Procédé selon la revendication 4 **caractérisé en ce que** ledit additif est une source carbonée utilisée comme substrat de croissance.

6. Procédé selon l'une des revendications 1 à 5 **caractérisé en ce que** ledit effluent aqueux est un aquifère.

7. Procédé selon l'une des revendications 1 à 6 **caractérisé en ce qu'**il est de type biobarrière.

8. Procédé selon la revendication 7 **caractérisé en ce que** l'oxygène est fourni par addition d'air ou de dioxygène dans l'aquifère via un piézomètre relié à un compresseur et implanté directement dans ledit aquifère.

9. Procédé selon la revendication 7 **caractérisé en ce que** l'oxygène est fourni par injection d'eau oxygénée.

10. Procédé selon la revendication 7 **caractérisé en ce que** l'oxygène est fourni par au moins un composé chimique injecté dénommé « Oxygen Release Compound » ou ORC.

11. Procédé selon l'une des revendications 1 à 6 **caractérisé en ce qu'**il est de type biofiltre.

12. Procédé selon l'une des revendications 7 à 11 **caractérisé en ce que** l'on met en place le support dans la biobarrière ou dans le biofiltre et on cultive la bactérie *M. austroafricanum* I-2562 dans un réacteur sur le milieu de croissance contenant un substrat de croissance, ce qui permet d'obtenir une biomasse importante tout en induisant les systèmes enzymatiques responsables de la dégradation du MTBE ou du TAME ; puis, après croissance, on introduit la culture obtenue sur le support.

13. Procédé selon l'une des revendications 7 à 11 **caractérisé en ce que** l'on introduit le support et la bactérie *M. austroafricanum* I-2562 de façon simultanée, puis on laisse la bactérie se développer en présence d'un substrat de croissance, de manière à fixer la bactérie sur le support simultanément à sa croissance.

## FIG.1

## FIG.2